# EUROPEAN PATENT SPECIFICATION

(11) **EP 0 626 130 B1**
(45) Date of publication and mention of the grant of the patent: **17.02.1999**
(21) Application number: 94201455.6
(22) Date of filing: 24.05.1994
(51) Int. Cl.: A01J 7/00

(54) **A construction for milking animals**
Vorrichtung zum Melken von Tieren
Dispositif de traite d'animaux

(30) Priority: 28.05.1993 NL 9300918
(43) Date of publication of application: 30.11.1994
(73) Proprietor: MAASLAND N.V., 3155 PD Maasland (NL)
(72) Inventor: van den Berg, Karel, NL-2971 BR Bleskensgraaf (NL)
(74) Representative: Corten, Maurice Jean F.M.

(56) References cited:
- EP-A- 0 385 539
- US-A- 4 222 346

## Description

The present invention relates to a construction for milking animals, comprising one or more milking units connected to a ring line in which a milk tank with spraying means for cleaning the interior side is incorporated, whilst, near the connection of the discharge outlet of the milk tank to the ring line, a pump is incorporated in the ring line for circulating milk or rinsing fluid, while, taken in the direction of flow, there is provided in the ring line behind the pump, a three-way valve.

Such a construction is known from EP-A-0 385 539.

In this known construction rinsing fluid can be introduced into the milk tank via a separate rinsing line in which is incorporated a valve and which at its end is provided with a spray nozzle. The rinsing fluid is circulated by the pump in the circular line at a relatively high speed. The above described construction has the disadvantage that in order to clean the interior of the milk tank the whole ring line must be filled with rinsing fluid and the rinsing fluid is circulated through the whole ring line before it can be used to clean the interior of the milk tank. Consequently a thoroughly cleaning of the milk tank takes a relative long time while much rinsing liquid is used. Furthermore energy is wasted by circulating the cleaning liquid through the whole ring line, as the ring line itself is much easier to clean than the milk. For cleaning the ring line it is enough to circulate the rinsing liquid a few times through the ring line, while for cleaning the milk tank it is necessary that the rinsing liquid must be circulated for a much longer time in order to clean the interior thoroughly.

The invention has for its object to implement the construction in such a manner that the above-described disadvantages do not occur or are at least minimized. According to the invention, the above-described construction for milking animals is therefore characterized in that a rinsing fluid line is connected to the three-way valve at the end of which rinsing fluid line spraying means are provided. In this construction the ring line may have a length exceeding the length of the rinsing fluid line. The advantage of this construction is that for the purpose of cleaning the milk tank, a rinsing fluid ring line of a reduced length is sufficient, which will result in less rinsing liquid, a better cleaning system and/or a lower pump power.

It makes it furthermore possible to clean the milk tank separately from the ring line.

In an advantageous embodiment in accordance with the invention, a milking unit is connected, taken in the direction of flow, to the ring line in a point behind the three-way valve. Consequently, the length of the ring line, through which the milk is transferred to the milk tank, becomes fully independent of the shortened rinsing fluid ring line to be used for cleaning the milk tank.

According to the invention, a non-return valve is incorporated between the pump and the three-way valve, whilst between the non-return valve and the three-way valve an air inlet valve is included in the ring line for the purpose of removing milk or rinsing fluid from the ring line or the line connected to the spray nozzle. After cleaning of the milk tank, all the rinsing fluid must be removed from the shortened rinsing fluid ring line. Using the air inlet valve, the line connected to the spray nozzle is emptied, whilst the rinsing fluid present in the milk tank will be discharged, e.g. to the sewer, via the discharge connection of the milk tank and with the aid of a valve which, taken in the direction of flow, is positioned just before the pump. Also when the ring line to which the milking units are connected is to be cleaned, the entire ring line can be emptied afterwards with the aid of the air inlet valve and the fluid in the milk tank can be removed in the afore-mentioned manner; a relatively low pump power will be sufficient to clean the ring line.

Using the afore-mentioned three-way valve, milk or a rinsing fluid can on the one hand be circulated through the entire ring line, whilst on the other hand cleaning the milk tank itself can be realized via the shortened ring line with the spray nozzle. In accordance with the invention, switching of the three-way valve can be effected by means of a computer-produced signal. This might be effected immediately after the milk tank has been emptied and after the fact that the milk tank is empty has been reported to the computer. The use of a computer for this purpose will of course be easy when this computer is already available, which is the case when, in accordance with the invention, the milking unit operates automatically and co-operates with an animal identification system, whilst the computer of the automatic milking unit and/or of the animal identification signal supplies signals for controlling the milking and cleaning procedures, more in particular for the control of the said pump, three-way valve and air inlet valve incorporated in the ring line. The construction, in which more specifically the three-way valve is switched under the control of a computer, can be advantageously employed in such an automatically operating milking system, in which system a milking unit then comprises more in particular a robot for the automatic connection of the teat cups to the teats of an animal to be milked. Especially when such a robot is used, the entire milking and cleaning procedure can be effected without any action by the farmer.

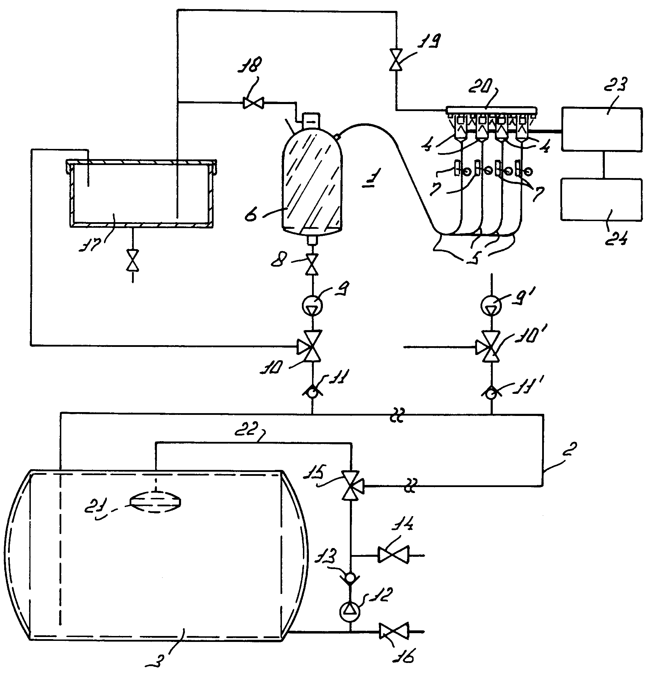

For a better understanding of the invention and to show how the same may be carried into effect, the invention will now be described in greater detail with reference to the accompanying drawing which schematically illustrates the construction for milking animals in accordance with the invention. Before giving this description, it can be noted that it is known that during milking, the milk obtained by means of a milking unit is transferred to the milk tank via the ring line. So as to keep the milk flowing to the milk tank in motion to prevent milk residues from settling in the ring line, the milk is circulated from the tank through the ring line at a relatively low speed. The milk tank is usually emptied a few times per week and cleaned. To that end, a rinsing fluid is passed into the ring line and from there to the tank, whereafter this rinsing fluid is circulated in the ring line by means of the pump. For an adequate cleaning of the interior side of the milk tank, in which use is made of spraying means, it is highly desirable for the rinsing fluid to be circulated by the pump through the ring line at a relatively high speed, which requires a considerably higher pump power than is required for circulating the milk through the ring line and the milk tank.

The Figure shows a milking unit 1 connected to a ring line 2, in which a milk tank 3 is incorporated. The milking unit 1 comprises four teat cups 4 which are to be connected to the teats of an animal to be milked, of which teat cups 4 the milk tubes 5 are passed to a milk meter 6 constituted by a collecting glass. The milk tubes 5 are provided with shut-off implements 7 which are each used to close a milk tube by pinching or otherwise, as soon as the vacuum in a corresponding teat cup has fallen out. The teat cups 4 can be connected to the teats of an animal to be milked with the aid of a robot 23, in which case this robot 23 has a robot arm which serves as a carrier for the teat cups 4. In this situation, the milking robot 23 is controlled by a computer 24. From the collecting glass 6, the milk obtained is transferred to the ring line 2. To that end, the lower end of the collecting glass 6 is connected via a valve 8 to a pump 9. By means of the pump 9, the milk is pumped into the ring line via the three-way valve 10 and the non-return valve 11. A plurality of milking units may, of course, be connected to the ring line 2; the drawing shows the pump 9', the three-way valve 10' and the non-return valve 11', via which units milk may be transferred from the collecting glass of a second milking unit to the ring line 2.

In the ring line 2, near the point of connection of the outlet of the milk tank 3 to the ring line 2, a pump 12 is incorporated, by means of which milk can be circulated through the ring line 2 in order to keep the milk in the milk tank in motion and to prevent milk residues from settling in the ring line 2. Behind the pump 12, taken in the direction of flow, there are incorporated in the ring line 2, relatively close to the pump 12, arranged one after the other, a non-return valve 13, an air inlet valve 14 and a three-way valve 15. Just before the pump 12, a valve 16 is provided between the discharge outlet connection of the milk tank 3 and the pump 12. The milk tank can be emptied via this valve 16, whilst milk contained in the ring line 2 can be removed with the aid of the air inlet valve 14 and via the valve 15.

For cleaning the entire system there are a plurality of provisions, which render it possible to clean a milking unit individually, to clean the overall ring line separately and to clean the interior of the milk tank separately. For cleaning the collecting glass 6 and the discharge line thereof, a closed circuit is provided, which circuit is formed by a rinsing fluid reservoir 17, a line leading from there via a valve 18 to the collecting glass 6, the valve 8, the pump 9, the three-way valve 10 and a line which from this three-way valve 10 is fed back to the rinsing fluid reservoir 17. When the valves 18 and 8 are in the open state, rinsing fluid can be sucked-up with the aid of the pump 9 from the rinsing fluid reservoir 17 and be circulated. So as to enable also cleaning of the teat cups 4, a by-pass line is present, which from the rinsing fluid reservoir 17 extends, via a valve 19 to a cleansing block 20, to which the teat cups are connected after milking, and from there to the collecting glass 6 via the milk tubes 5. The rinsing fluid sucked-up by the pump 9 is not only passed directly to the collecting glass 6 via the valve 18, but also to the collecting glass 6 via the valve 19, the cleansing block 20, the teat cups 4 and the milk tubes 5. Each milking unit can consequently be cleaned separately with the aid of the pump 9. By switching the three-way valve 10, the rinsing fluid sucked-up by the pump 9 can also be transferred to the ring line 2. After a predetermined quantity of rinsing fluid has been pumped into the ring line 2 and from there into the milk tank 3, the rinsing fluid can be pumped by the pump 12 through the entire ring line 2, while after some time it can be discharged via the valve 16, e.g. to the sewer. The milk tank 3 can be cleaned independently of the cleaning operation of the ring line 2. For that purpose, a spray nozzle 21 is disposed high up in the tank, which spray nozzle is connected to the three-way valve 15 via a line 22. By switching the three-way valve 15, the ring line 2 is interrupted and a ring line of a shorter length is established, as a result of which the rinsing fluid present in the milk tank can directly be fed back to the milk tank 3, i.e. without flowing through the ring line 2, with the aid of the pump 12 via the non-return valve 13, the three-way valve 15, the line 22 and the spray nozzle 21, the interior walls of the milk tank 3 being cleaned with the aid of the spray nozzle 21. Since the line 22 to the spray nozzle 21 is very much shorter in comparison to the length of the ring line 2, a relatively low pump power may be used because of the resultant much lower resistance losses, and yet an adequate pressure on the rinsing fluid is obtained to enable the walls of the milk tank 3 to be cleaned thoroughly by means of the spray nozzle 21.

The construction described here may form part of a fully automated milking and cleaning system, in which use can be made of an automatic system for allowing access of the animals, optionally selectively, to the milking parlour, an animal identification system, a teat cleaning system, a robot for the automatic connection of the teat cups, an automatically proceeding milking procedure with built-in checks on the quality of the milk and the development of the procedure, an automatic feeding system etc. The entire system is then controlled by a computer, so that of course the computer can be utilized for controlling the elements of the construction described in detail here, more specifically the pump 12, the air inlet valve 14 and the three-way valve 15 incorporated in the ring line 2.

The invention is not limited to the embodiment described here and illustrated in the drawing, but embraces all kinds of modifications, of course falling within the scope of the accompanying claims.

## Claims

1. A construction for milking animals, comprising one or more milking units (1) connected to a ring line (2) in which a milk tank (3) with spraying means for cleaning the interior side of the milk tank (3) is incorporated, whilst, near the connection of the discharge outlet of the milk tank (3) to the ring line (2), a pump (12) is incorporated in the ring line (2) for circulating milk or rinsing fluid, while, taken in the direction of flow, there is provided in the ring line (2) behind the pump (12), a three-way valve (15), characterized in that a rinsing fluid line (22) is connected to the three-way valve (15), at the end of which rinsing fluid line (22) the spraying means (21) are provided.

2. A construction as claimed in claim 1, characterized in that the ring line (2) has a length exceeding the length of the rinsing fluid line (22).

3. A construction as claimed in claim 1 or 2, characterized in that a milking unit (1) is connected, taken in the direction of flow, to the ring line (2) in a point behind the three-way valve (15).

4. A construction as claimed in claim 1, 2 or 3, characterized in that a non-return valve (13) is disposed between the pump (12) and the three-way valve (15).

5. A construction as claimed in claim 4, characterized in that between the non-return valve (13) and the three-way valve (15) there is disposed in the ring line (2) an air inlet valve (14) for the purpose of removing milk or rinsing fluid from the ring line (2) or from the line (22) connected to the spray nozzle (21).

6. A construction as claimed in any one of the preceding claims, characterized in that the three-way valve (15) is controlled by a computer (24).

7. A construction as claimed in any one of the preceding claims, characterized in that a milking unit (1) includes a robot for automatically connecting the teat cups (4) to the teats of an animal to be milked.

8. A construction as claimed in any one of the preceding claims, characterized in that a milking unit (1) operates automatically and co-operates with an animal identification system, whilst the computer (24) of the automatic milking unit (1) and/or of the animal identification system supplies signals for controlling the milking and cleaning procedures, more specifically for controlling the said pump (12), three-way valve (15) and air inlet valve (14) incorporated in the ring line.

## Patentansprüche

1. Vorrichtung zum Melken von Tieren mit einer oder mehreren Melkeinheiten (1), die mit einer Ringleitung (2) verbunden sind, in der ein Milchtank (3) mit einer Sprühvorrichtung zum Reinigen der Innenseite des Milchtankes (3) angeordnet ist, wobei nahe der Anschlußstelle der Auslaßöffnung des Milchtankes (3) an die Ringleitung (2) eine Pumpe (12) zum Zuführen von Milch oder Reinigungsflüssigkeit in der Ringleitung (2) angeordnet ist, und wobei in Strömungsrichtung hinter der Pumpe (12) ein Dreiwegeventil (15) in der Ringleitung (2) angeordnet ist,
dadurch gekennzeichnet, daß mit dem Dreiwegeventil (15) eine Spülflüssigkeitsleitung (22) verbunden ist, an deren Ende die Sprühvorrichtung (21) angeordnet ist.

2. Vorrichtung nach Anspruch 1,
dadurch gekennzeichnet, daß die Ringleitung (2) länger als die Spülflüssigkeitsleitung (22) ist.

3. Vorrichtung nach Anspruch 1 oder 2,
dadurch gekennzeichnet, daß an einer in Strömungsrichtung hinter dem Dreiwegeventil (15) liegenden Stelle eine Melkeinheit (1) an die Ringleitung (2) angeschlossen ist.

4. Vorrichtung nach Anspruch 1, 2 oder 3,
dadurch gekennzeichnet, daß zwischen der Pumpe (12) und dem Dreiwegeventil (15) ein Rückschlagventil (13) angeordnet ist.

5. Vorrichtung nach Anspruch 4,
dadurch gekennzeichnet, daß zwischen dem Rückschlagventil (13) und dem Dreiwegeventil (15) ein Lufteinlaßventil (14) in der Ringleitung (2) angeordnet ist, um aus der Ringleitung (2) oder der mit der Sprühdüse (21) verbundenen Leitung (22) Milch oder Spülflüssigkeit zu entfernen.

6. Vorrichtung nach einem der vorhergehenden Ansprüche,
dadurch gekennzeichnet, daß das Dreiwegeventil (15) von einem Computer (24) gesteuert wird.

7. Vorrichtung nach einem der vorhergehenden Ansprüche,
dadurch gekennzeichnet, daß eine Melkeinheit (1) einen Roboter zum automatischen Anschließen der Zitzenbecher (4) an die Zitzen eines zu melkenden Tieres aufweist.

8. Vorrichtung nach einem der vorhergehenden Ansprüche,
dadurch gekennzeichnet, daß eine Melkeinheit (1) automatisch arbeitet und mit einem Tieridentifizierungssystem zusammenwirkt, wobei der Computer (24) der automatischen Melkeinheit (1) und/oder des Tieridentifizierungssystems Signale zum Steuern des Melk- und des Reinigungsvorganges liefern, insbesondere zum Steuern der Pumpe (12), des Dreiwegeventils (15) und des Lufteinlaßventils (14), die in der Ringleitung angeordnet sind.

## Revendications

1. Dispositif de traite d'animaux, comprenant une ou plusieurs unités de traite (1) reliées à une conduite périphérique (2) dans laquelle est incorporé un réservoir à lait (3) avec des moyens pulvérisateurs pour nettoyer la face interne du réservoir à lait (3), tandis que, près de la jonction du conduit de décharge du réservoir à lait (3) vers la conduite périphérique (2), une pompe (12) est incorporée dans la conduite périphérique (2) pour faire circuler du lait ou un fluide de rinçage, en même temps qu'il est prévu, en étant vue dans le sens d'écoulement, dans la conduite périphérique (2) en aval de la pompe (12), une vanne à trois voies (15), caractérisé en ce qu'une conduite (22) de fluide de rinçage est reliée à la vanne à trois voies (15), à l'extrémité de laquelle conduite (22) de fluide de rinçage sont prévus les moyens pulvérisateurs (21).

2. Dispositif selon la revendication 1, caractérisé en ce que la conduite périphérique (2) a une longueur supérieure à celle de la conduite de liquide de rinçage (22).

3. Dispositif selon la revendication 1 ou 2, caractérisé en ce qu'une unité de traite (1) est reliée, en étant vue dans le sens d'écoulement , à la conduite périphérique (2) en un point en aval de la vanne à trois voies (15).

4. Dispositif selon la revendication 1, 2 ou 3, caractérisé en ce qu'un clapet de non-retour (13) est disposé entre la pompe (12) et la vanne à trois voies (15).

5. Dispositif selon la revendication 4, caractérisé en ce qu'entre le clapet de non-retour (13) et la vanne à trois voies (15) il y a, disposée dans la conduite périphérique (2), une vanne d'admission d'air (14) dans le but de soutirer du lait ou du fluide de rinçage à partir de la conduite périphérique (2) ou de la conduite (22) reliée à la buse pulvérisatrice (21).

6. Dispositif selon l'une quelconque des revendications précédentes, caractérisé en ce que la vanne à trois voies (15) est commandée par un ordinateur (24).

7. Dispositif selon l'une quelconque des revendications précédentes, caractérisé en ce qu'une unite de traite (1) comporte un robot pour relier automatiquement les godets de trayons (4) aux trayons d'un animal à traire.

8. Dispositif selon l'une quelconque des revendications précédentes, caractérisé en ce qu'une unité de traite (1) fonctionne automatiquement et coopère avec un système d'identification des animaux, tandis que l'ordinateur (24) de l'unité de traite (1) et/ou du système d'identification des animaux fournit des signaux pour commander les procédures de traite et de nettoyage, plus spécifiquement pour commander ladite pompe (12), ladite vanne à trois voies (15) et ladite vanne d'admission d'air (14) incorporées dans la conduite périphérique.
